(19) Europäisches Patentamt
European Patent Office
Office européen des brevets

(11) **EP 2 061 171 A1**

(12) **EUROPEAN PATENT APPLICATION**
published in accordance with Art. 153(4) EPC

(43) Date of publication:
**20.05.2009 Bulletin 2009/21**

(51) Int Cl.:
**H04J 11/00** *(2006.01)*

(21) Application number: **06810200.3**

(22) Date of filing: **15.09.2006**

(86) International application number:
**PCT/JP2006/318408**

(87) International publication number:
**WO 2008/032407 (20.03.2008 Gazette 2008/12)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventor: **NAKAGIRI, Etsuji**
**Kawasaki-shi**
**Kanagawa 211-8588 (JP)**

(74) Representative: **Holtby, Christopher Lawrence**
**Haseltine Lake**
**Lincoln House, 5th Floor**
**300 High Holborn**
**GB-London WC1V 7JH (GB)**

(54) **APPARATUS AND METHOD FOR TRANSMITTING SIGNALS BY USE OF MULTICARRIER SYSTEM**

(57) A transmitter which transmits transmission symbols using a multicarrier system is used. The transmitter has means for adjusting a phase rotation amount for each of N data symbols; means for carrying out inverse Fourier transform on the data symbols having undergone the phase adjustment and generating the transmission symbols; and phase calculating means for determining the phase rotation amount with the use of a complex neural network. The phase calculating means has N neurons which derive, from N complex input signals to which a temporarily determined phase rotation has been carried out, one complex output signal after inverse Fourier transform, and use the complex output signal as the complex input signal for a next time; and state updating means for updating the phase rotation amount according to a value of an objective function calculated from the complex output signal. Thereby, it is possible to give an appropriate weight to each of signal components of each subcarrier transmitted using the multicarrier system, and sufficiently suppress a peak-to-average power ratio (PAPR) of a transmission signal.

FIG.1

**Description**

TECHNICAL FIELD

The present invention relates to a technical field of a multicarrier communication system such as an orthogonal frequency division multiplexing (OFDM). In particular, the present invention relates to an apparatus and method for transmitting/receiving a signal in which peak power is suppressed.

BACKGROUND ART

A OFDM system and a OFDMA (Orthogonal Frequency Division Multiple Access) system have been adopted for ground-wave digital television broadcasting, WiMax (World Interoperability for Micro wave Access), and also, are planed to be adopted to a 3.9G/4G mobile telephone system. A signal to be transmitted in the OFDM(A) system is generated from a combination of many subcarriers. Therefore, when phases of the many subcarriers agree with each other, very high peak power occurs. When peak power is thus high, a transmission side should prepare corresponding transmission power (resources), which may be disadvantageous especially for a mobile terminal. On the reception side, it is difficult to precisely reproduce a signal corresponding to the high peak power, and an error rate increases accordingly. Further, the signal having high peak power may cause useless radiation outside of a corresponding band and may have a great influence on circumferential bands. Various methods have been proposed to suppress peak power.

As a prior art method to suppress peak power of a OFDM signal, a "phase inversion method", a "distortion method", a "coding method", and so forth, are known. They have drawback and advantage. Thereamong, the "phase inversion method" attracts attention as a method which is easy to implement and also is relatively effective. As a specific "phase inversion method", by using an optimization method with the use of a "real type neural network", it is expected to provide superior peak power suppressing performance. According to the method, out-band radiation power and a bit error rate can also be improved (for example, see Patent Document 1).

According to the "phase inversion method", a problem of searching a phase to be given to each subcarrier (for suppressing peak power of a OFDM signal) is replaced by a combinational optimization problem and is formulated. It is known to apply an approximate means for the combinational optimization problem (solution by means of Hopfield Neural Network (HNN)) to such a "mutual-connected real type neural network". According to "Patent Document 1: Multicarrier Communication System and Multicarrier Communication Apparatus", by using the method, an optimum phase inversion amount is determined.

Below, the "phase inversion method" will be outlined.

In a OFDM (A) signal, X= $(X_0, X_1, ... X_{N-1})$ denotes N data symbols (N dimension real vector) before phase inversion and which are to be transmitted. Also, a phase inversion amount to be used to each data symbol can be expressed by an N dimension vector of binary variables as p= $(p_0, p_1, ... p_{N-1})$. It is noted that, $p_m = \pm 1$ (m=0, 1, ..., N-1).

Assuming that Y= $(Y_0, Y_1, ... Y_{N-1})$ denotes N data symbols after inverse discrete Fourier transform (IDFT), Y can be expressed as follows:

$$Y_n = \frac{1}{N}\sum_{m=0}^{N-1} p_m X_m e^{j\frac{2\pi}{N}nm} = \frac{1}{N}\sum_{m=0}^{N-1} p_m X_m \{\cos(\frac{2\pi}{N}nm) + j \cdot \sin(\frac{2\pi}{N}nm)\}$$

There n = 0, 1, ..., N-1, and j denotes a pure imaginary number. In order to evaluate a magnitude of peak power, peak-to-average power ratio (PARR) is defined as the following formula:

$$PAPR = \frac{\max_{0 \leq n < N}\{|Y_n|^2\}}{E\{|Y_n|^2\}}$$

There, $|\cdot|$ denotes an absolute value as a complex number. E$\{\cdot\}$ denotes an average. Accordingly, E$\{|Y_n|^2\}$ denotes average power of the OFDM(A) signal. Further, an objective function is defined by:

$$J(p) = \sum_{n=0}^{N-1} \left( |Y_n|^2 - \frac{E\{\|Y\|^2\}}{N} \right)^2$$

As a result of the objective function being minimized, power of each time approximates the average power $E\{\|Y_n\|^2\}$, and PARR can be reduced. Accordingly, reducing the peak power is equivalent to minimizing the objective function.

In the prior art method, in order to solve the minimization problem, a mutual-connected real type neural network is used. For this purpose, real numbers expressing a real part and an imaginary part of a complex number are prepared as the following formulas, and the objective function J(p) is rewritten.

The following substitutions are carried out.

$$A_{nm} = \mathrm{Re}\{X_m e^{j\frac{2\pi}{N}nm}\}$$

$$B_{nm} = \mathrm{Im}\{X_m e^{j\frac{2\pi}{N}nm}\}$$

$$c = \|X\|^2 = \sum_{n=0}^{N-1} X_n^2$$

Then,

$$J(p) = \frac{1}{N^4} \sum_{n=0}^{N-1} \left\{ \left( \sum_{m=0}^{N-1} A_{nm} p_m \right)^2 + \left( \sum_{m=0}^{N-1} B_{nm} p_m \right)^2 - c \right\}^2$$

However, it is not possible to minimize the objective function as it is. Therefore, in the prior art method, the above-mentioned objective function is developed to a quartic polynomial concerning $p_m$, and the objective function is rewritten with the use of a relational expression of $p_m^2 = p_m^4 = 1$. Thus, a polynomial in which a $p_m^2$ term and a $p_m^4$ term are regarded as constant terms is again defined as follows:

$$\overline{J}(p) \equiv J(p) \big|_{p_n^2=1, p_n^4=1, n=0,1,\ldots,N-1}$$

This polynomial is newly used as an objective function. Thereby, it is possible to reach a desired solution with the use of the HNN method. If a common quartic polynomial of $p_m$ were considered without substitution of a $p_m^2$ term and a $p_m^4$ term with constant terms, a possibility that $p_m$ has a value other than $\pm 1$ would occur, and a meaningless solution (invalid solution) for combinational optimization could be output.

The minimization problem with the use of the mutual-connected real type neural network is carried out as follows. $u_i(t)$, $x_i(t)$ denote a i-th real value internal function and output state at a time t, respectively. An output function and a state change formula are defined as follows:

$$\frac{du_i(t)}{dt} = -\left.\frac{\partial \overline{J(p)}}{\partial p_i}\right|_{p=x(t-1)}$$

$$x_i(t) = \tanh \varepsilon u_i(t)$$

There, $\varepsilon$ denotes a positive constant. It should be noted that the output function can have two values, i.e., +1 and -1. In this method, only very coarse control can be carried out because only inverting or maintaining a phase can be carried out, to be used when data symbols are combined. Further, generally speaking, by carrying out iterative calculation sufficiently, an objective function gradually converges on an optimum value. However, in this method, because a change in value between before and after phase inversion is large, a large change in output may occur in response to a small time delay. That is, a case where an output value does not change continuously may occur not rarely. As a result, it may not be possible to sufficiently ensure convergence, stability, reliability and so forth for a solution. Further, in the method, the objective function J(p) is not used as it is but a polynomial rewritten in such a manner that a term of $p_m^2$ and a term of $p_m^4$ are replaced by constants is used. Therefore, as the number of symbols increases, a calculation load increases, a very complicate polynomial is required, complicate hardware is required, and a calculation speed degrades.

Patent Document: Japanese Laid-Open Patent Publication No. 2004-147126

SUMMARY OF THE INVENTION

PROBLEM TO BE SOLVED BY THE INVENTION

Thus, the phase inversion method has various problems. In short, a first problem is that, an activation function ($p_m$) of a real type neural network has only two values, i.e., +1 and -1, and only very course control, i.e., whether a phase is inverted or maintained, can be carried out. Accordingly, there remains a possibility that peak power has not at any time reached the true minimum value. Especially for a case where the number of subcarriers is small, peak power may not be sufficiently suppressed.

A second problem is that, because phase inversion is accompanied by a large change in amount from positive to negative or from negative to positive, a steep change of the objective function occurs between before and after iterative state updating in an optimization algorithm, and it may be hard to keep continuity, stability, reliability and so forth of calculation.

A third problem is that, a calculation is complicate. A phase rotation amount is originally suitable for being expressed by a complex number in a polar coordinate. However, since the neural network used in the above-mentioned method is of a real type, this method introduces two real valued variables, i.e., a real part and an imaginary part, of a single variable of a polar coordinate type complex number, and complicate iterative algorithm should be executed.

Further, this method uses the complicate objective function (polynomial accompanied by state updating). Therefore, as the number of symbols (the number of sub-channels) increases, a calculation formula becomes very complicate and a calculation speed is low. Thus, this method may not be considered as an efficient method.

The present invention has been devised for the purpose of solving at least one of the above-mentioned problems, and an object of the present invention is to provide an appropriate weight to each of signal components of each subcarrier transmitted using a multicarrier system, and to sufficiently suppress a peak-to-average power ratio (PAPR) of a transmission signal.

MEANS FOR SOLVING THE PROBLEMS

According to the present invention, a transmitter which transmits transmission symbols using a multicarrier system is used. The transmitter has means for adjusting a phase rotation amount for each of N data symbols; means for carrying out inverse Fourier transform on the data symbols having undergone the phase adjustment and generating the transmission symbols; and phase calculating means for determining the phase rotation amount with the use of a complex neural network. The phase calculating means has N neurons which derive, from N complex input signals to which a temporarily determined phase rotation has been applied, one complex output signal after inverse Fourier transform, and use the complex output signal as the complex input signal for a next time; and state updating means for updating the phase rotation amount according to a value of an objective function calculated from the complex output signal.

ADVANTAGEOUS EFFECTS OF THE INVENTION

According to the present invention, it is possible to provide an appropriate weight to each of signal components of each subcarrier transmitted using a multicarrier system, and to sufficiently suppress a peak-to-average power ratio (PAPR) of a transmission signal.

BRIEF DESCRIPTION OF DRAWINGS

FIG. 1 depicts a transmitter according to one embodiment of the present invention.
FIG. 2 depicts a receiver according to the embodiment of the present invention.
FIG. 3 depicts a neural network circuit used in a phase rotation amount calculating part depicted in FIG. 1.
FIG. 4 is a flow chart depicting an operation example in the embodiment of the present invention.
FIG. 5 is a flow chart depicting another operation example in the embodiment of the present invention.

DESCRIPTION OF REFERENCE NUMERALS

11 digital modulator
12 serial-parallel converting part (S/P)
13 phase adjusting part
14 inverse discrete Fourier transform part (IDFT)
15 parallel-serial converting part (P/S)
16 digital-to-analog converting part (D/A)
17 radio transmitting part
18 optimum phase rotation amount calculating part
19 phase information multiplexing part
21 radio channel receiving part
22 analog-to-digital converting part (A/D)
23 serial-parallel converting part (S/P)
24 discrete Fourier transform part (DFT)
25 phase adjusting part
26 parallel-serial converting part (P/S)
27 digital demodulating part
28 phase rotation amount restoration part

BEST MODE FOR CARRYING OUT THE INVENTION

According to one mode for carrying out of the present invention, by applying a "complex neural network", in particular, an "amplitude-phase-type (polar coordinate type) complex neural network", to a method for suppressing peak power of an OFDM signal, it is possible to improve a logical operation speed and the number of circuits, and to greatly improve peak power suppressing performance.

According to the mode for carrying out of the present invention, a phase is expressed, not by two values of inserting and maintaining, but by complex numeric values which can have various values. Further, a phase rotation amount $\theta = (\theta_0, \theta_1, ... \theta_{N-1})$ can control an output value finely ($\theta_m = (2\pi n_m/N)$) as the number of one set of symbols N (the number of subcarriers) increases. Therefore, convergence on a more appropriate solution can be expected.

According to the mode for carrying out of the present invention, as a result of an "amplitude-phase-type (polar coordinate type) complex neural network" being introduced, a neural network circuit configuration can be basically simplified, it becomes possible to treat, with the use of polar coordinate type complex numbers, not only a phase inversion but also various phase rotation amounts as they are, and simple and high-precision optimization is realized.

In a real-type neural network, operation should be proceeded with, with the use of two variables corresponding to a real part and an imaginary part. However, in a complex neural network, only a complex number input-output of an absolute value 1 should be treated. Therefore, only a phase parameter of one variable should be considered, and it is possible to simplify an implementation model.

Further, according to the mode for carrying out of the present invention, it is not necessary to introduce a polynomial expression as in the prior art of an objective function in which terms of $p_m^2$ and $p_m^4$ are replaced by 1. The objective function in which terms of $p_m^2$ and $p_m^4$ are replaced by 1 becomes a very complicate polynomial depending on the symbol number N. However, according to the present method, such a complex polynomial should not be used. Therefore, it is possible to carry out calculation very easily.

A recurrent type complex neural network (including a mutual-connected type) usable in the mode for carrying out of the present invention has higher safety than a real type neural network. Therefore, in comparison to the prior art method, an optimization calculation speed is higher, a circuit size can be reduced, and it is possible to carry out optimization more efficiently. The recurrent type complex neural network has been explained, for example, by Akira Hirose and Hirofumi Onishi, "Proposal of relative-minimization learning for behavior stabilization of complex-valued recurrent neural networks" Neurocomputing, 24:163-171, 1999.

According to the mode for carrying out the present invention, different from a "real type neural network", an output value has a continuous value. Therefore, this method is superior in solution convergence, stability and so forth, and it is possible to appropriately adjust the number of times of iteration in consideration of a peak power suppressing amount to be optimized.

EMBODIMENT 1

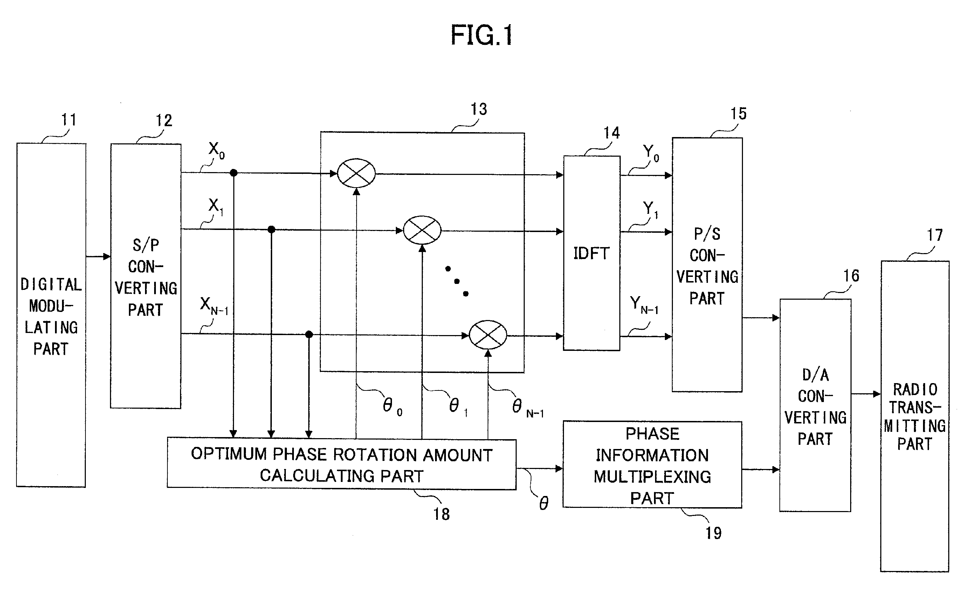

FIG. 1 depicts a transmitter according to the mode for carrying out the present invention. The transmitter transmits a signal according to an OFDM or OFDMA system. The transmitter is used in a communication system of an OFDM(A) system, may be used in a base station (Node B) or may be used in a user apparatus (UE). FIG. 1 depicts a digital modulator 11, a serial-parallel converting part (S/P) 12, a phase adjusting part 13, an inverse discrete Fourier transform part (IDFT) 14, a parallel-serial converting part (P/S) 15, a digital-to-analog converting part (D/A) 16, a radio transmitting part 17, an optimum phase rotation amount calculating part 18, and a phase information multiplexing part 19.

The digital modulator 11 converts data to transmit to data symbols according to a modulation system to use. As the modulation system, any appropriate system such as QPSK, 16QAM or 64QAM may be used. The data symbols are expressed by complex numbers corresponding to signal points on a signal point constellation.

The serial-parallel converting part (S/P) 12 converts a serial signal sequence of the data symbols to parallel signal sequences. In an example depicted in the figure, N parallel data symbol sequences are papered corresponding to the subcarrier number N to be used. However, generally speaking, the number of the parallel sequences may not strictly agree with the subcarrier number.

The phase adjusting part 13 gives a phase rotation ($\theta_0$, $\theta_1$, ... $\theta_{N-1}$) to each of the complex data symbols ($X_0$, $X_1$, ... $X_{N-1}$) according to a control signal. The phase rotation amount may be referred to as a weighting factor, a weight or such. As described later, the phase rotation amount may have, not only $\pm 1$, but also various values expressed by $(2\pi n/N)$ radians. Accordingly, a data symbol $X_m$ may be expressed as $X_m \exp(j\theta_m)$ after having undergone phase adjustment. N corresponds to the subcarrier number, and an appropriate number may be prepared therefor. As an example, N may be so large on the order of 1000. For example, assuming that N = 1000, the phase amount has an integer multiple of $(2\pi/1000)$ radians = 0.36 degrees. Therefore, it is possible to control the phase rotation amount substantially continuously.

The inverse discrete Fourier transform part (IDFT) 14 carries out inverse discrete Fourier transform on the data symbols after undergoing the phase adjustment, and carries out modulation according to the OFDM system.

The parallel-serial converting part (P/S) 15 converts the N data symbols after undergoing the inverse discrete Flourier transform to a serial signal sequence.

The digital-to-analog converting part (D/A) 16 converts a value expressed by a digital amount to an analog amount.

The radio transmitter 17 processes the transmission symbols thus converted to the analog amounts to be transmitted via radio waves (for example, including frequency conversion, band limitation, power amplification, and so forth).

The optimum phase rotation amount calculating part 18 calculates a phase rotation amount to be given to each data symbol such that peak-to-average power (PAPR) for the transmission symbols reduces. A method of the calculation will be described later.

The phase information multiplexing part 19 multiplexes the calculated phase rotation amount together with pilot data symbols. This is because the phase rotation amount calculated by the optimum phase rotation amount calculating part 18 is to be notified of to a reception side. For example, in IEEE802.16 PHY or ground-wave digital television DVB-T, in a segment configuration of symbol data, pilot symbol data for communicating the phase rotation amount should be added. The phase information multiplexing part 19 disposes the phase rotation amount on the pilot data, and provides the same to the DA converting part 16.

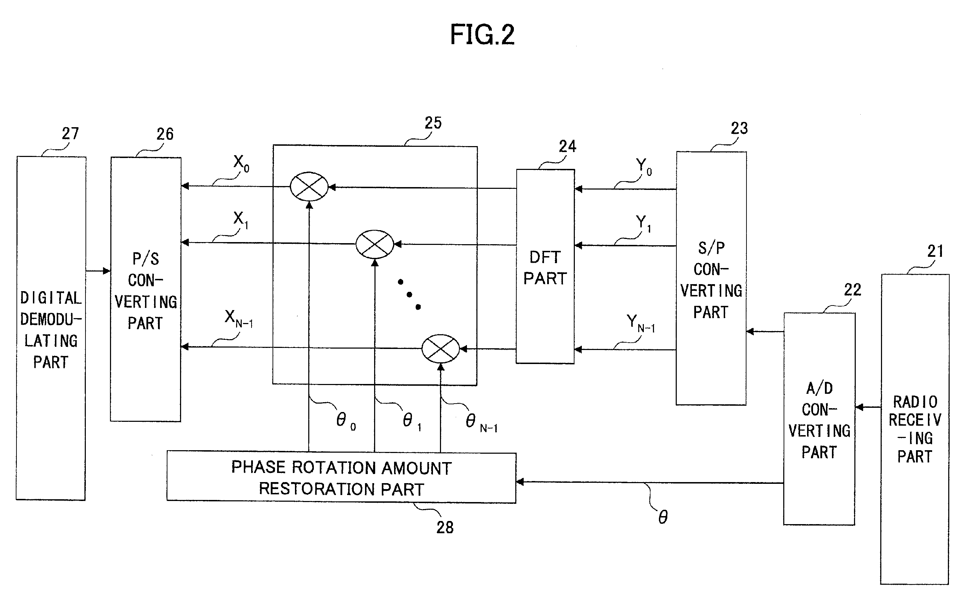

FIG. 2 depicts a receiver in the embodiment. The receiver is used in a communication system according to the OFDM(A) system, may be used in the base station (Node B) or may be used in the user apparatus (UE). FIG. 2 depicts a radio channel receiving part 21, an analog-to-digital converting part (A/D) 22, a serial-parallel converting part (S/P) 23, a discrete Fourier transform part (DFT) 24, a phase adjusting part 25, a parallel-to-serial converting part (P/S) 26, a digital demodulating part 27 and a phase rotation amount restoration part 28.

The radio channel receiving part 21 carries out a process (band limitation, frequency conversion, power amplification and so forth) for converting a received radio signal to an analog signal of a baseband.

The analog-to-digital converting part (A/D) converts the analog signal to a digital signal.

The serial-parallel converting part 23 converts a serial data symbol signal sequence to N parallel signal sequences.

The discrete Flourier transform part (DFT) 24 carries out discrete Flourier transform on data symbols, and carries out demodulation according to the OFDM system.

The phase adjusting part 25 adjusts a phase of each data symbol according to a control signal.

The parallel-serial converting part (P/S) 26 converts parallel data symbol signal sequences to a serial signal sequence.

The digital demodulating part 27 converts the data symbols to particular data, and outputs the same.

The phase rotation amount restoration part 28 extracts control information which indicates a phase rotation amount notified of from a transmission side, and outputs a control signal for adjusting a phase, to the phase adjusting part 25.

By and large, transmitted data is converted to data symbols expressed by complex numbers. To particular data symbols, phase rotations are given, Fourier transform is then performed on the particular data symbols, and are then transmitted via radio waves. How the phase rotation has been carried out is notified of to the reception side via the control information or such in which the information of the phase rotation has been multiplexed together with the pilot data symbols. On the reception side, the received data symbols undergo Fourier transform, and phase rotation. The phase rotation is carried out according to the contents notified of from the transmission side. Data symbols having undergone the phase rotation then undergo data demodulation, and then, transmission data is restored. As a result of the appropriate phase rotation being carried out on each data symbol on the transmission side, a peak-to-average power ratio (PAPR) of the transmission symbols is appropriately suppressed.

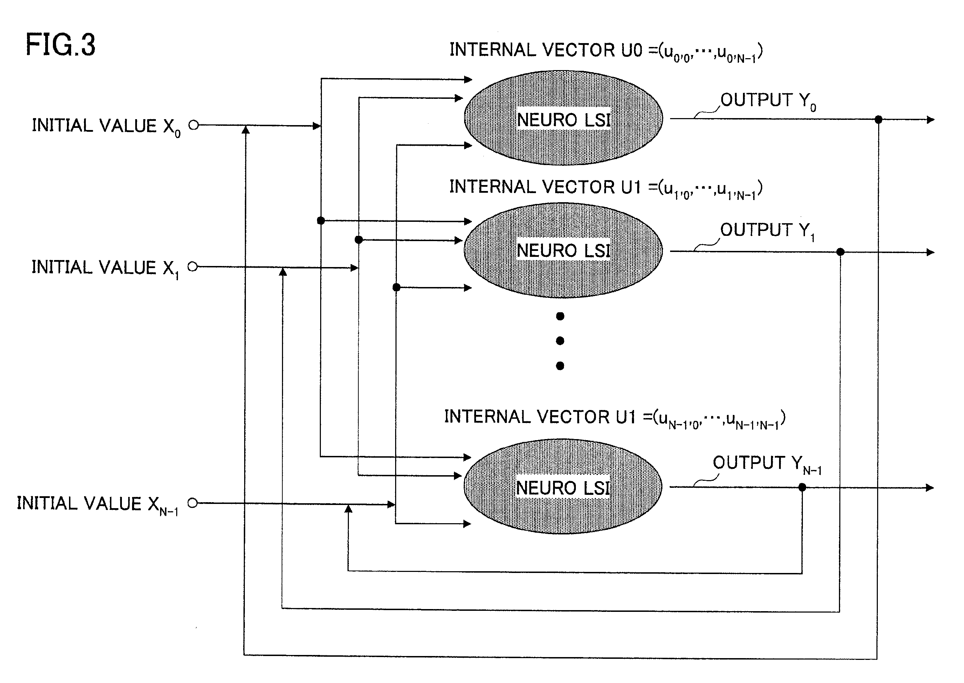

Next, how to determine the phase rotation amount will be described. In the present embodiment, a mutual-connected complex neural network circuit as depicted in FIG. 3 is used in the optimum phase rotation amount calculating part 18 in the transmitter of FIG. 1. All of an initial value $X_m$, an internal vector $u_m$ and an output $Y_m$ (m = 0, 1, ..., N-1) are amounts expressed by complex numbers. The initial value $X_m$ corresponds to a data symbol (an output of the SP 12) before undergoing phase adjustment. Values (complex numbers) of the data symbols are given to each of N neuron LSIs. Each of the neuron LSIs outputs one output from the N data symbols (for example, the m-th neuron LSI outputs one $Y_m$ based on the N inputs). The output is then returned to the input side, and is used as an input for a next time. The particular neuron LSI forms an N-input one-output neuron, and the entire system forms an N-input N-output neural network. Each of the neuro LSIs gives, to each of input data symbols, a weight (phase) which is temporarily determined. Then, based on a sum of the thus-weighted data symbols, the neuro LSI calculates a value of an objective function. In the present embodiment, the sum of the weighted data symbols corresponds to data symbols having undergone inverse Fourier transform. The value of the objective function is calculated as $J(Yn(exp(j\theta_m))$. As described later, this objective function is different from the prior art objective function calculated as $J(Yn(p_m))$. Further, a state is updated according to a method described later, and a new phase rotation amount and output value are derived. This is carried out iteratively, and an optimum phase rotation amount is obtained. A finally obtained phase rotation amount is notified of to the phase adjusting part 13, and is applied to a signal which is actually transmitted.

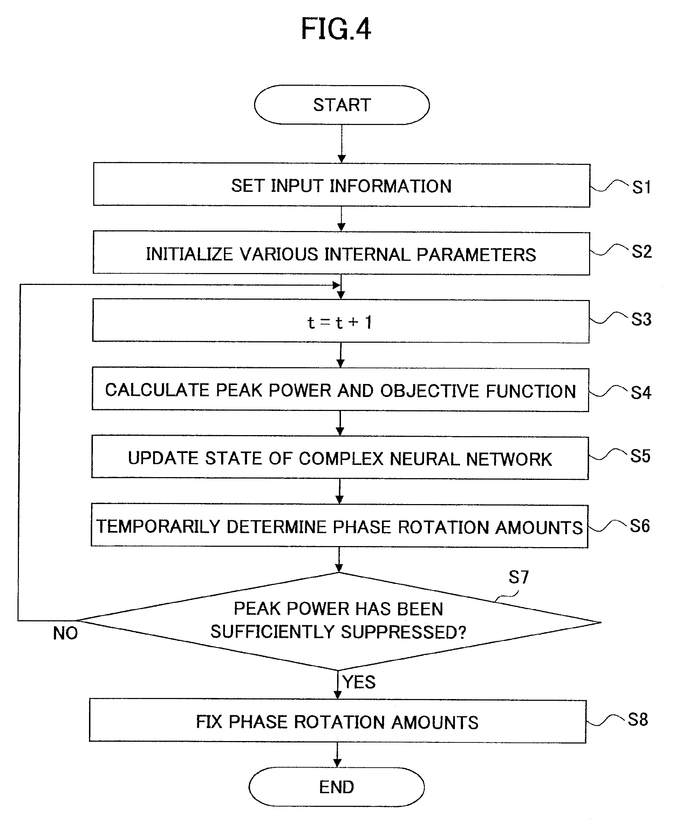

FIG. 4 depicts a flow chart of an operation example used in the embodiment of the present invention. Operation depicted in the figure is mainly used by the optimum phase rotation amount calculating part 18 of FIG. 1, and in particular relates to operation of the neuro LSIs of FIG. 3.

In step S1, input information (initial value) is set. The input information is given by N data symbols before undergoing phase adjustment.

In step S2, various internal parameters are initialized. Typical ones of the internal parameters are an iteration parameter (t=0) and a phase rotation amount given to each of the N data symbols.

In step S3, the value of the iteration parameter t is incremented by 1.

In step S4, a peak-to-average ratio PAPR and an objective function J are calculated. PAPR is calculated by the following formula.

$$PAPR = \frac{\max_{0 \le n < N}\{|Y_n|^2\}}{E\{|Y_n|^2\}}$$

There, |·| denotes an absolute value as a complex number, and E{·} denotes an average. Accordingly, $E\{|Y_n|^2\}$ denotes an average power of an OFDM(A) signal. $Y_n$ means an n-th component of data symbols after undergoing IDFT. In the present embodiment, the input information before undergoing phase adjustment is expressed as $X=(X_0, X_1, \ldots X_{N-1})$ and a vector expressing the phase rotation amount is expressed as $\theta=(\theta_0, \theta_1, \ldots \theta_{N-1})$. Different from the prior art, the phase rotation amount $\theta_m$ may have, not only two values, but also various values expressed by $(2\pi n_m/N)$ radians (both m and $n_m$ denote integers equal to or smaller than N-1). Also each component of the data symbols after undergoing IDFT $Y=(Y_0, Y_1, \ldots Y_{N-1})$ can be expressed by the following formula.

$$Y_n = \frac{1}{N}\sum_{m=0}^{N-1} X_m e^{j(\frac{2\pi}{N}nm+\theta_m)} = \frac{1}{N}\sum_{m=0}^{N-1} X_m \{\cos(\frac{2\pi}{N}nm+\theta_m) + j\cdot\sin(\frac{2\pi}{N}nm+\theta_m)\}$$

There, n=0, 1, ..., N-1, and j denotes a pure imaginary number.
Further, the objective function is defined by

$$J(\theta) = \sum_{n=0}^{N-1}\left(|Y_n|^2 - \frac{E\{\|Y\|^2\}}{N}\right)^2$$

For the purpose of simplification, $J(Y_n(\exp(j\theta_m))$ is abbreviated as $J(\theta)$.
As a result of a value of the objective function being minimized, power at each time approximates an average power $E\{\|Y\|^2\}$, and PAPR reduces. Accordingly, reduction of peak power is equivalent to minimization of the objective function. It should be especially noted that $J(\theta)$ is not a polynomial function of $\theta$, but $\theta$ is treated as a complex phase component. In the embodiment, the complex neural network is used. Therefore, it is not necessary to decompose to a real part and an imaginary part as in the prior art, and also, it is not necessary to prepare a polynomial which has been developed intricately.
With the use of the above-mentioned formulas, state updating in the complex neural network (in the embodiment, the mutual-connected complex neural network) is carried out.
When $u_i(t)$ and $x_i(t)$ (corresponding to $Y_i$ in FIG. 3) denote an internal function and an output state of a complex value of the i-th (i=0, 1, ..., N-1) at a time t, the output state is updated according to the following formulas.

$$u_i(t) = e^{j\cdot\theta_i(t)}$$

$$\tau\frac{d\theta_i(t)}{dt} = -\frac{\partial J(\theta)}{\partial \theta_i}$$

$$x_i(t) = \tanh\{|u_i(t)|\}\cdot e^{j\cdot\theta(t)} = e^{j\cdot\theta_i(t)}$$

In the above-mentioned formulas, it can be seen that, $u_i(t)$ is one complex number having an absolute value of 1 and also $x_i(t)$ is one complex number having an absolute value of 1. $\tau$ is a positive constant.
In step S6, a phase rotation amount derived from the state updating is temporarily determined as a phase rotation amount used for a next time.
In step S7, with the use of the temporarily determined phase rotation amount, it is determined whether a peak power (PAPR) value is one for which an objective suppressing amount has been achieved. When PAPR has not been sufficiently suppressed, step S3 is returned to, and the same procedure is repeated.
As to thus carrying out the state updating iteratively with the use of the complex neural network, and obtaining a local optimum solution of the objective function according to a partial differential equation of the above-mentioned type, see the following articles, for example.

(Article 1): Akira Hirose and Hirofumi Onishi "Proposal of relative-minimization learning for behavior stabilization of complex-valued recurrent neural networks". Neurocomputing, 24: 163-171,1999

(Article 2): Akira Hirose "Continuous complex-valued back-propagation learning.". Electronic Letters, 28(20): 1854-1855, 1992

In step S8, when the peak-to-average power ratio PAPR has been sufficiently suppressed in step S7, the phase rotation amounts are fixed as values to be used for actual transmission symbols, and are notified of to the phase adjusting part 13. Thus, the flow is finished.

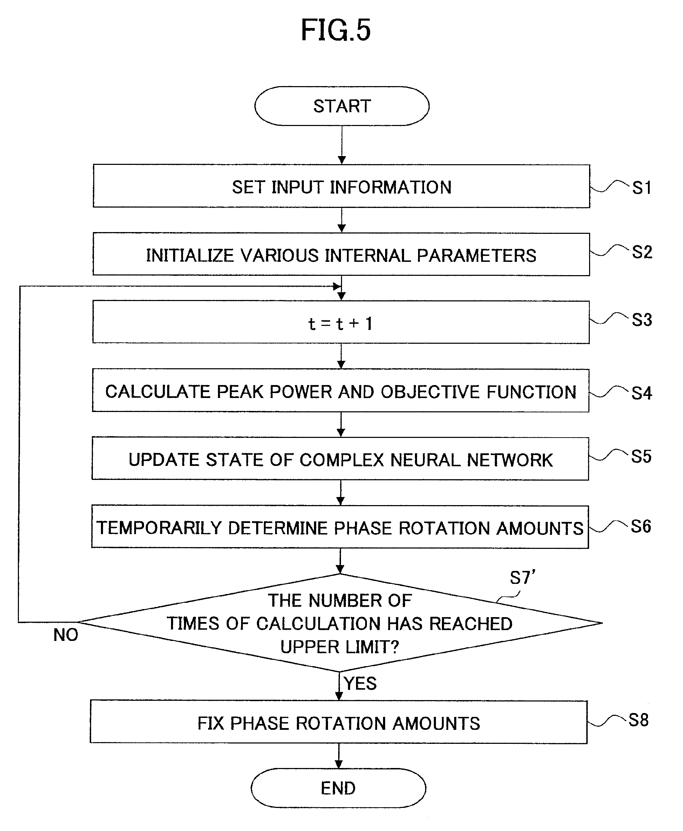

It is noted that, although, in step S8, it is determined whether the peak-to-average power ratio PAPR has been sufficiently reduced, it is also possible to, alternatively or additionally, determine whether the state updating has been carried out a predetermined number of times (see FIG. 5). A flow of FIG. 4 cannot deal with an unlikely case where PAPR is not reduced. A flow of FIG. 5 is such that, even if the above-mentioned unlikely case occurs, the flow can be passed through. The method as depicted in FIG. 5 is especially advantageous for data transmission which strongly requires real-time performance.

The thus-determined phase rotation amounts $\theta=(\theta_0, \theta_1, ... \theta_{N-1})$ are used to weight the respective data symbols in the phase adjusting part 13 (FIG. 1), the data symbols then undergo inverse discrete Fourier transform, and are transmitted via radio waves. Further, information indicating the determined phase rotation amounts $\theta=(\theta_0, \theta_1, ... \theta_{N-1})$ is notified of to the reception side by the above-described method.

Thus, the preferable embodiment has been described. However, the present invention is not limited thereto, and various variations and alterations may be made within the scope and spirit of the present invention.

## Claims

1. A transmitter which transmits transmission symbols using a multicarrier system, **characterized in that** the transmitter comprises:

   means for adjusting a phase rotation amount for each of N data symbols;
   means for carrying out inverse Fourier transform on the data symbols having undergone the phase adjustment and generating the transmission symbols; and
   phase calculating means for determining the phase rotation amount with the use of a complex neural network, **characterized in that:**

   the phase calculating means comprises:

   N neurons which derive, from N complex input signals to which temporarily determined phase rotations have been applied, one complex output signal after inverse Fourier transform, and use the complex output signal as the complex input signal for a next time; and
   state updating means for updating the phase rotation amount according to a value of an objective function calculated from the complex output signal.

2. The transmitter as claimed in claim 1, **characterized in that:**

   the phase rotation amounts used for the N data symbols are expressed by integer multiples of $(27\pi/N)$.

3. The transmitter as claimed in claim 1, **characterized in that:**

   the objective function is set up in such a manner that the objective function decreases as a peak-to-average power ratio decreases.

4. The transmitter as claimed in claim 1, **characterized in that:**

   the state updating means updates the phase rotation amount according to the formula

$$Y_n = \frac{1}{N}\sum_{m=0}^{N-1} p_m X_m e^{j\frac{2\pi}{N}nm} = \frac{1}{N}\sum_{m=0}^{N-1} p_m X_m \{\cos(\frac{2\pi}{N}nm) + j \cdot \sin(\frac{2\pi}{N}nm)\}$$

where:

t denotes a time parameter,
$\theta_i(t)$ denotes a phase rotation amount used for the i-th data symbol,
$J(\theta)$ denotes the objective function, and
r denotes a positive constant.

**5.** The transmitter as claimed in claim 1, **characterized in that:**

control information with which the phase rotation amounts used for the data symbols included in the transmission symbols can be derived is attached to and transmitted together with the transmission symbols.

**6.** The transmitter as claimed in claim 1, **characterized in that:**

the phase calculating means iteratively updates the phase rotation amounts until a peak-to-average power ratio becomes smaller than a predetermined value.

**7.** The transmitter as claimed in claim 1, **characterized in that:**

the phase calculating means iteratively updates the phase rotation amounts a predetermined upper limit number of times.

**8.** A method for transmitting transmission symbols using a multicarrier system, **characterized in that** the method comprises:

a phase calculating step of determining phase rotation amounts with the use of a complex neural network;
a step of adjusting the phase rotation amounts for respective ones of N data symbols; and
a step of carrying out inverse Fourier transform on the data symbols having undergone the phase adjustment and generating the transmission symbols, **characterized in that:**

the phase calculating step comprises:

a step of deriving, in each of N neurons, from N complex input signals to which temporarily determined phase rotations have been applied, one complex output signal after the inverse Fourier transform, and
a step of calculating a value of an objective function and updating the phase rotation amounts according to the calculated value,

**characterized in that:**

the derived complex output signal is used by each neuron as the complex input signal for a next time.

# FIG.1

11 — DIGITAL MODU-LATING PART

12 — S/P CON-VERTING PART

13 — (multiplier block with $\theta_0$, $\theta_1$, ..., $\theta_{N-1}$)

$X_0$, $X_1$, $X_{N-1}$

14 — IDFT

$Y_0$, $Y_1$, $Y_{N-1}$

15 — P/S CON-VERTING PART

16 — D/A CON-VERTING PART

17 — RADIO TRANS-MITTING PART

18 — OPTIMUM PHASE ROTATION AMOUNT CALCULATING PART

19 — PHASE INFORMATION MULTIPLEXING PART

$\theta_0$, $\theta_1$, $\theta_{N-1}$

$\theta$

# FIG.2

21 RADIO RECEIVING PART

22 A/D CONVERTING PART

23 S/P CONVERTING PART

$Y_0$, $Y_1$, $Y_{N-1}$

24 DFT PART

25

$X_0$, $X_1$, $X_{N-1}$

$\theta$

$\theta_{N-1}$, $\theta_1$, $\theta_0$

28 PHASE ROTATION AMOUNT RESTORATION PART

26 P/S CONVERTING PART

27 DIGITAL DEMODULATING PART

# FIG.3

INITIAL VALUE $X_0$ — INTERNAL VECTOR U0 $= (u_{0,0}, \cdots, u_{0,N-1})$ — NEURO LSI — OUTPUT $Y_0$

INITIAL VALUE $X_1$ — INTERNAL VECTOR U1 $= (u_{1,0}, \cdots, u_{1,N-1})$ — NEURO LSI — OUTPUT $Y_1$

INITIAL VALUE $X_{N-1}$ — INTERNAL VECTOR U1 $= (u_{N-1,0}, \cdots, u_{N-1,N-1})$ — NEURO LSI — OUTPUT $Y_{N-1}$

13

# FIG.4

START

SET INPUT INFORMATION — S1

INITIALIZE VARIOUS INTERNAL PARAMETERS — S2

$t = t + 1$ — S3

CALCULATE PEAK POWER AND OBJECTIVE FUNCTION — S4

UPDATE STATE OF COMPLEX NEURAL NETWORK — S5

TEMPORARILY DETERMINE PHASE ROTATION AMOUNTS — S6

PEAK POWER HAS BEEN SUFFICIENTLY SUPPRESSED? — S7

NO

YES

FIX PHASE ROTATION AMOUNTS — S8

END

# FIG.5

START

| SET INPUT INFORMATION | S1 |

| INITIALIZE VARIOUS INTERNAL PARAMETERS | S2 |

| t = t + 1 | S3 |

| CALCULATE PEAK POWER AND OBJECTIVE FUNCTION | S4 |

| UPDATE STATE OF COMPLEX NEURAL NETWORK | S5 |

| TEMPORARILY DETERMINE PHASE ROTATION AMOUNTS | S6 |

THE NUMBER OF TIMES OF CALCULATION HAS REACHED UPPER LIMIT? — S7'

NO

YES

| FIX PHASE ROTATION AMOUNTS | S8 |

END

## INTERNATIONAL SEARCH REPORT

| International application No. |
|---|
| PCT/JP2006/318408 |

**A.    CLASSIFICATION OF SUBJECT MATTER**
*H04J11/00*(2006.01)i

According to International Patent Classification (IPC) or to both national classification and IPC

**B.    FIELDS SEARCHED**

Minimum documentation searched (classification system followed by classification symbols)
H04J11/00

Documentation searched other than minimum documentation to the extent that such documents are included in the fields searched
Jitsuyo Shinan Koho     1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2004-147126 A   (Zaidan Hojin Osaka Industrial Promotion Organization), 20 May, 2004 (20.05.04), Full text; all drawings (Family: none) | 1-8 |
| Y | JP 09-298495 A   (NTT Mobile Communications Network Inc.), 18 November, 1997 (18.11.97), Fig. 9 (Family: none) | 1-8 |
| Y | JP 2000-022656 A   (Toshiba Corp.), 21 January, 2000 (21.01.00), Full text; all drawings (Family: none) | 1-8 |

☐  Further documents are listed in the continuation of Box C.    ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 05 December, 2006 (05.12.06) | Date of mailing of the international search report 12 December, 2006 (12.12.06) |
|---|---|
| Name and mailing address of the ISA/ Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004147126 A

**Non-patent literature cited in the description**

• **AKIRA HIROSE ; HIROFUMI ONISHI.** Proposal of relative-minimization learning for behavior stabilization of complex-valued recurrent neural networks. *Neurocomputing,* 1999, vol. 24, 163-171

• **AKIRA HIROSE.** Continuous complex-valued back-propagation learning. *Electronic Letters,* 1992, vol. 28 (20), 1854-1855